# EUROPÄISCHE PATENTSCHRIFT

(11) **EP 2 522 637 B1**
(45) Veröffentlichungstag und Bekanntmachung des Hinweises auf die Patenterteilung: **10.04.2019**
(21) Anmeldenummer: 11165372.1
(22) Anmeldetag: 09.05.2011
(51) Int. Cl.: C03B 37/08

(54) **Düseneinheit zur Herstellung von Fasern aus geschmolzenem Mineralmaterial**
Bushing Assembly for Producing Fibers from Molten Mineral Material
Ensemble Filiere Destine a la Production de Fibres a partir des matieres minerales en fusion

(43) Veröffentlichungstag der Anmeldung: 14.11.2012
(73) Patentinhaber: Umicore AG & Co. KG, 63457 Hanau-Wolfgang (DE)
(72) Erfinder: Singer, Rudolf, 55270, Engelstadt (DE)
(74) Vertreter: Banse & Steglich Patentanwälte PartmbB

(56) Entgegenhaltungen:
- JP-A- 2 006 350
- JP-A- 2008 044 801
- US-A- 3 150 225
- US-A- 3 512 948
- US-A- 5 879 427
- Loewenstein, K.L.: "The Manufacturing Technology of Continuous Glass Fibres", 1. Januar 1993 (1993-01-01), elsevier, amsterdam, XP000002658106, ISBN: 0 444 89346 6 Seiten 136-137, * Absatz, der die Seiten 136 und 137 verbindet *
- "REVETEMENTS DE PLATINE ACT", VERRE, INSTITUT DU VERRE, PARIS, FR, Bd. 8, Nr. 2, 1. Mai 2002 (2002-05-01), Seite 24/25, XP001123086, ISSN: 0984-7979

## Beschreibung

Bei der Herstellung von Mineralfasern, wie z.B. von Glasfasern für den Einsatz in glasfaserverstärkten Kunststoffen oder Basaltfasern, werden die Ausgangsstoffe für das Glas in einem Ofen geschmolzen und die entstandene Schmelze verschiedenen Spinnstellen zugeführt, an denen die Schmelze durch Düsen oder Öffnungen austritt. Die aus den Düsen austretenden Fäden werden abgezogen, durch Luftkühlung oder Besprühen mit Wasser gekühlt und zu einem oder mehreren Faserbündeln zusammengeführt. Die Faserbündel werden gegebenenfalls mit einer Schlichte versehen und anschließend auf Spulen gewickelt oder einer Schneidvorrichtung zugeführt. Dieses Material dient zur weiteren Verarbeitung z. B. als Isoliermaterial, in der Produktion von glasfaserverstärkten Thermoplasten oder als Hitzeschutzmaterial.

In der Offenlegungsschrift EP 229 648 A1 ist eine typische Spinndüse zum Spinnen von Glasfasern wiedergegeben. Die Spinndüse weist Reihen von Einzeldüsen in einer Bodenplatte auf, die entlang einer Geraden von Stirnplatte zu Stirnplatte der Düse angeordnet sind. An den Stirnplatten befinden sich separate Stromzuführungen. Über die Stromzuführung wird ein elektrischer Strom durch die Spinndüse geleitet, der die Heizung der Glasschmelze bewirkt.

In der Patentschrift JP 1 333 011 wird ein Herstellungsverfahren für Glasfaserspinndüsen beschrieben. Bei diesem Verfahren werden die Einzeldüsen an der Spinndüse dadurch angebracht, dass vorgefertigte konische Einzeldüsen mit Hilfe einer Platinunterlegscheibe in vorbereitete Bohrungen der Spinndüse eingeschweißt werden. Die Einzeldüsen sind dabei jeweils zu Zweierreihen zusammengefasst, die quer zur Richtung des Heizstroms durch die Bodenplatte der Spinndüse laufen.

US 3,150,225 offenbart ein Bushing mit Seitenteilen und Bodenplatte, welches aus einem einstückigen Zuschnitt gebogen wird.

Beim Einsatz derartiger Vorrichtungen treten verschiedene Probleme auf.

Ein häufiges Problem ist eine Verkürzung der Lebensdauer der Spinndüsenanordnung. Die mit den Düsen bzw. Öffnungen versehene Bodenplatte ist in Draufsicht üblicherweise rechteckig, wobei die vier Seitenkanten direkt an die gegenüberliegenden Seiten- und Stirnwände des rechteckigen Körpers und die Bodenplatte geschweißt sind. Erhebliche Biegespannungen, die infolge des längeren Kontaktes mit dem schweren geschmolzenen Material mit der Zeit auf die Bodenplatte einwirken führen zu einem Durchbiegen infolge einer zeitabhängigen plastischen Verformung oder eines zeitabhängigen Kriechens ("Sagging").

Dieses Durchbiegen ist nicht nur schädlich, weil es zu einer ungleichmäßigen Wärmeverteilung führt, sondern verkürzt durch die mechanischen Belastungen der Schweißnähte die Lebensdauer. Generell führt die mechanische Belastung in Verbindung mit den hohen Temperaturen zu Veränderungen des Metallgefüges und Verformungen, welche insbesondere die Schweißnähte stark belasten.

Diese Probleme werden oft durch den Einsatz von oxiddispergierten Edelmetallen als Werkstoff zur Herstellung der Düseneinheiten adressiert. Allerdings wird durch das Schmelzschweißen eine Koagulation der fein verteilten Oxidpartikel bewirkt, so daß die Schweißnähte hierdurch strukturell schwächer als das umgebende Material sind.

Es war daher die Aufgabe, eine Düseneinheit (ein so genanntes Bushing) bereit zu stellen, welches diese Nachteile nicht aufweist.

Diese Aufgabe wird gelöst durch ein Bushing, in welchem Schweißnähte nach Möglichkeit vermieden werden. Hierzu wird von dem entsprechenden Bushing eine Abwicklung erzeugt, gemäß der Abwicklung ein einstückiger Zuschnitt aus Edelmetall gefertigt und gefaltet. Anschließend werden - sofern erforderlich- die Kanten des Bushings dicht geschweißt. Auf diese Weise können bei der Herstellung von Bushings Schweißnähte vermieden werden und durch geschickte Erstellung der Abwicklung Schweißnähte in gering beanspruchte Bereiche verlegt werden.

### Kurze Beschreibung der Erfindung

1. Aus einem einstückigen Zuschnitt faltbaren Flachmaterials aus Edelmetall gefaltetes Bushing zur Herstellung von Fasern aus geschmolzenem Mineralmaterial mit einer Bodenplatte und hieran einstückig angelenkten und nach oben stehenden Seiten- und Stirnwänden, an die jeweils Flansche einstückig angelenkt sind, wobei eine Seitenwand mit je einer Stirnwand über ein Eckteil miteinander verbunden sind und der einstückige Zuschnitt der Abwicklung des Bushings entspricht und Flächen für die Bodenplatte und für die Eckteile, Seiten- und Stirnwände sowie Flansche aufweist.
2. Bushing nach Punkt 1, wobei der einstückige Zuschnitt faltbaren Flachmaterials aus Edelmetall in unterschiedlichen Bereichen unterschiedliche Dicken aufweist.
3. Bushing nach einem oder mehreren der Punkte 1 bis 2, wobei die Seitenwände, Stirnwände, Bodenplatte oder mehrere davon Sicken aufweisen.
4. Bushing nach einem oder mehreren der Punkte 1 bis 2, wobei zwischen den Seitenwänden und den Flanschen Deckplatten angeordnet sind, welche mit den Flanschen und den Seitenwänden einstückig angelenkt sind.
5. Bushing nach einem oder mehreren der Punkte 1 bis 4, wobei das Edelmetall ausgewählt ist aus der Gruppe bestehend aus PtAu5, PtIr1, PtRh5, PtRh10, PtRh20, PtIr3, PtIr5, reinem Platin und deren Kombinationen.
6. Bushing nach einem oder mehreren der Punkte 1 bis 4, wobei das Edelmetall ein oxiddispersionverstärktes Edelmetall ist.
7. Bushing nach einem oder mehreren der Punkte 1 bis 4, wobei das Edelmetall ein mit einem oder mehreren Oxiden, insbesondere Yttriumoxid und/oder Zircondioxid, oxiddispersionverstärktes Edelmetall ist.
8. Verfahren zur Herstellung des Bushings gemäß Punkt 1 zur Herstellung von Fasern aus geschmolzenem Mineralmaterial mit den Schritten
   - Erstellen einer Abwicklung des herzustellenden Bushings;
   - Herstellung eines einstückigen Zuschnitts aus faltbarem Flachmaterials aus Edelmetall, welches der Abwicklung des Bushings entspricht;
   - Gegebenenfalls Abtragen von Material des einstückigen Zuschnitts, um Bereiche unterschiedlicher Dicken zu erzeugen;
   - Gegebenenfalls Anbringen von Sicken;
   - Falten des einstückigen Zuschnitts.
9. Verfahren nach Punkt 8, wobei die Herstellung des einstückigen Zuschnitts und/oder das Abtragen von Material durch Fräsen, Wasserstrahlschneiden, Laserschneiden, Stanzen, Schneiden, Sägen, Hobeln, Schleifen oder deren Kombinationen erfolgt.
10. Verfahren nach einem oder mehreren der Punkte 8 bis 9, wobei in einem weiteren Verfahrensschritt zusätzliche Elemente an dem Bushing angebracht werden, insbesondere Stromzuführungen und/oder Stütz- bzw. Verstärkungsteile.
11. Einstückiger Zuschnitt aus faltbarem Flachmaterial aus Edelmetall, welcher der Abwicklung eines Bushings gemäß Punkt 1 entspricht und zur Herstellung eines Bushings geeignet ist, welches Flächen für eine Bodenplatte, und hieran einstückig angelenkt Seiten- und Stirnwände, sowie daran jeweils einstückig angelenkte Flansche, und ferner Flächen für Eckteile aufweist.

### Detaillierte Beschreibung der Erfindung

Die vorliegende Erfindung betrifft neuartige Bushings zur Herstellung mineralischer Fasern, ein Verfahren zu deren Herstellung und ein Zwischenprodukt zur Herstellung der Bushings.

Bei der Herstellung von Bushings werden Bleche aus Edelmetall eingesetzt und die Teile der Bushings aus dem Edelmetallblech gestanzt, gesägt oder auf anderer Weise ausgetrennt und durch Schweißen miteinander verbunden. Die Schweißnähte stellen hierbei Schwachstellen dar. Dies kommt besonders bei oxiddispergierten Edelmetallen zum Tragen, da beim Schmelzschweißen die Dispersoide koagulieren und die Schweißnähte keine dispergierten Oxide mehr aufweisen und somit ein erheblicher Unterschied der Materialeigenschaften zwischen den Schweißnähten und dem übrigen Material besteht. Diese Nachteile werden behoben, indem gemäß der Erfindung zur Herstellung eines Bushings eine (Blech)Abwicklung des herzustellenden Bushings erstellt wird. Diese Abwicklung dient zur Herstellung eines einstückigen Zuschnitts aus faltbarem Flachmaterial aus Edelmetall, welches der Abwicklung des Bushings entspricht. Dieser einstückige Zuschnitt aus faltbarem Flachmaterial aus Edelmetall mit einer Bodenplatte und hieran einstückig angelenkten und nach oben stehenden Seiten- und Stirnwänden, an die jeweils Flansche einstückig angelenkt sind, welches der Abwicklung eines Bushings entspricht und zur Herstellung eines Bushings geeignet ist, ist ebenfalls Gegenstand der Erfindung.

Der erhaltene Zuschnitt kann weiter bearbeitet werden. So können Öffnungen bzw. Auslaufdüsen in der Bodenplatte angebracht oder optional Material abgetragen werden, etwa um Bereiche unterschiedlicher Dicken zu erzeugen, Ungenauigkeiten zu beseitigen oder Oberflächen oder Kanten nachzubearbeiten. Der Zuschnitt kann anschließend mit Sicken oder auch Falten versehen werden, um eine Verstärkung des fertigen Bushings zu erreichen. Nach Abschluß dieser Nachbearbeitung wird der so vorbereitete Zuschnitt gefaltet bzw gebogen und die Kanten miteinander benachbarter Seiten- und Stirnwände bzw. Flansche miteinander verschweißt. Das Falten kann insbesondere durch Abkanten oder Dreipunktbiegen erfolgen.

Zur Herstellung des einstückigen Zuschnitts und/oder das Abtragen von Material werden im Allgemeinen Verfahren wie Fräsen, Wasserstrahlschneiden, Laserschneiden, Stanzen, Schneiden, Sägen, Hobeln, Schleifen oder deren Kombinationen eingesetzt. Zur Herstellung des einstückigen Zuschnitts können insbesondere Fräsen, Wasserstrahlschneiden, Laserschneiden, Stanzen, Schneiden, Sägen und deren Kombinationen eingesetzt werden. Zum Abtragen von Material können im Allgemeinen Hobeln, Schleifen oder Fräsen eingesetzt werden. Das Schweißen kann durch alle geeigneten Verfahren ausgeführt werden wie beispielsweise Elektronenstrahlschweißen, Laserschweißen oder WIG-(Wolfram-Inertgas)Schweißen.

Anschließend können in weiteren Verfahrensschritten zusätzliche Elemente an dem Bushing angebracht werden, wie Stromzuführungen, Stütz- oder Verstärkungsteile oder Anderes. Geeignete Stromzuführungen sind beispielsweise beschrieben in der EP 1268353 und in den dort zitierten Schriften. Beispiele für Verstärkungs- und Halteteile werden in der EP 1441993 sowie der dort zitierten Literatur beschrieben.

Kann ein Bushing nicht oder nur so abgewickelt werden, daß ein Falten eines einstückigen Zuschnitts nicht möglich ist, so wie dies bei komplexeren Bushings der Fall sein kann, so kann die Vorgehensweise der Erfindung dennoch erfolgversprechend angewandt werden, indem mehrere Zuschnitte entsprechend hergestellt und wie oben beschrieben bearbeitet und die Zuschnitte dann entweder stoffschlüssig miteinander verbunden werden (z.B. durch Umbördeln oder Umschlagen), so daß Schweißen lediglich zur Abdichtung erforderlich ist, oder die Schweißnaht kann in eine spannungsarme bzw. mechanisch wenig belastete Zone des Bushings verlegt werden.

Die Erfindung betrifft außerdem ein aus einem einstückigen Zuschnitt faltbaren Flachmaterials aus Edelmetall faltbares Bushing zur Herstellung von Fasern aus geschmolzenem Mineralmaterial mit einer Bodenplatte und hieran einstückig angelenkten und nach oben stehenden Seiten- und Stirnwänden, an die jeweils Flansche einstückig angelenkt sind. "Einstückig" ist im Sinne der Erfindung so zu verstehen, daß der Zuschnitt aus einem Teil gearbeitet ist und nicht aus mehreren Einzelteilen, etwa durch Schweißen, zusammengesetzt wurde. Der Ausdruck "einstückig angelenkt" ist hier so zu verstehen, daß Teile des Bushings aus einem Teil gearbeitet sind und so miteinander verbunden sind, daß gemäß der Abwicklung die Form des Bushings durch Biegen der Seitenwände, Stirnwände, Deckplatten und Flansche erhalten werden kann. Die Form der Seitenwände und Bodenplatte ist meist rechteckig, obwohl auch andere Formen denkbar sind.

Die Stirnwände können ebenfalls rechteckig oder quadratisch ausgebildet sein. Allerdings existieren auch Bushings, deren Stirnwände eine Form haben, die dreieckig, trapezförmig oder trapezförmig mit einem oder zwei angesetzten Rechtecken ist. Der Querschnitt eines Bushings mit einer derartigen Stirnwand ist zum Beispiel in der deutschen Offenlegungsschrift DE 102009051067 abgebildet. Dies hat den Vorteil, daß größere Bodenplatten mit einer größeren Zahl von Auslaufdüsen erhalten werden können. In diesem Fall sind zusätzlich zwischen den Seitenwänden und den Flanschen Deckplatten angeordnet, welche mit diesen einstückig angelenkt sind. Die Auslaufdüsen können als einfache Löcher bzw. Öffnungen ausgeführt sein oder durch in solchen Löchern befestigten Düseneinsätzen.

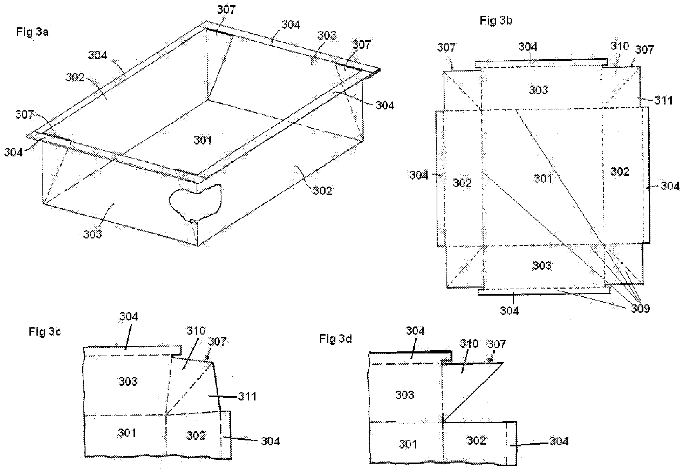

In der Erfindung ist die Seitenwand mit je einer Stirnwand über ein Eckteil miteinander verbunden, so wie dies in Figur 3 gezeichnet ist. Werden die Stirn- und Seitenwände nach oben gebogen, so wird das Eckteil gefaltet und ragt in das Bushinginnere, wo es auch wenn gewünscht an eine Stirnwand oder Seitenwand angelegt werden kann. Dies hat den Vorteil, daß dann zwischen Seiten- und Stirnwand keine Schweißnaht mehr erforderlich ist. Ähnlich kann auch verfahren werden, wenn die Stirnwand z.B. die Form eines Trapezes mit einem oben oder unten angebrachten Rechteck hat. In diesem Fall kann auch ein zusätzliches Eckteil zwischen Stirnwänden und den Deckplatten einstückig angelenkt sein, so daß auch zwischen Deckplatten und Stirnwänden keine Schweißnaht mehr erforderlich ist. In derartigen Fällen kann es jedoch empfehlenswert sein, die im Wesentlichen parallel zur Bodenplatte befindlichen, nach oben offenen Kanten des gefalteten Eckteils miteinander dicht zu schweißen. Hierdurch wird eine mechanisch beanspruchte Schweißnaht in der Ecke zwischen Stirnwand und Seitenwand so verlegt, daß keine oder nur noch eine gering beanspruchte Schweißnaht anzubringen ist, was die Standzeit des Bushings verlängert oder zur Einsparung von Edelmetall genutzt werden kann, indem ein dünneres Flachmaterial aus Edelmetall eingesetzt wird.

In einer weiteren spezifischen Ausführungsform kann die Schweißnaht auch von der Ecke in die Fläche der Seitenwand oder der Stirnwand verlegt werden, so daß die Blechenden aufeinander stoßen und verschweißt werden. Hierzu wird die Abwicklung des Bushings so erstellt, daß die Stirnwand bzw. die Seitenwand verlängert und entsprechend die benachbarte Seitenwand bzw. Stirnwand verkürzt und/oder mit einer Aussparung versehen wird, in welche sich der verlängerte Teil der Stirn- bzw. Seitenwand einfügt, so daß beim Falten des Bushings aus dem Zuschnitt des Flachmaterials die Ecke zwischen Seitenwand und Stirnwand gefaltet ist und die aneinander stoßenden Blechkanten der Stirn- und Seitenwände in einer Ebene auf einander treffen.

In einer weiteren Ausführungsform der Erfindung weist der einstückige Zuschnitt faltbaren Flachmaterials aus Edelmetall in unterschiedlichen Bereichen unterschiedliche Dicken auf. Dies kann einerseits dazu dienen, um eine strukturelle Verstärkung zu erreichen, andererseits kann diese Vorgehensweise auch gewählt werden, um sicher zu stellen, daß miteinander benachbarte und zu verschweißende Teile stets die gleiche Dicke aufweisen. Auf diese Weise können miteinander benachbarte Seiten- und Stirnwände bzw. Flansche miteinander verschweißt sein, wodurch miteinander benachbarte und durch Schweißen verbundene Abschnitte an der Stelle der Schweißnähte gleiche Dicken aufweisen.

Zur Verstärkung können bei den Bushings gemäß der Erfindung so wie bei den Bushings des Standes der Technik auch die Seitenwände, Stirnwände, Bodenplatte oder mehrere davon Sicken aufweisen, was im Allgemeinen zur Verstärkung des Bushings dient.

Das Bushing der Erfindung wird aus einem Flachmaterial aus Edelmetall hergestellt, um den hohen Temperaturen und der hohen Korrosivität von geschmolzenem Glas Rechnung zu tragen. Das Edelmetall ist in einer weiteren spezifischen Ausführungsform ausgewählt aus der Gruppe bestehend aus Gold, Iridium, Platin, Rhodium und deren Legierungen. Besonders geeignet ist ein Flachmaterial aus Edelmetall, wobei das Edelmetall ausgewählt ist aus der Gruppe bestehend aus PtAu5, PtIr1, PtRh5, PtRh10, PtRh20, PtIr3, PtIr5, reinem Platin und deren Kombinationen. Besonders gut geeignet ist oxiddispersionverstärktes (ODS) Edelmetall. Hierbei ist das Edelmetall oft ein mit einem oder mehreren Oxiden, insbesondere Yttriumoxid und/oder Zircondioxid, oxiddispersionverstärktes (ODS) Edelmetall. Derartige Werkstoffe sind im Prinzip bekannt und können beispielsweise nach den Verfahren erhalten werden, die in der EP 1781830 oder EP 1295954 beschreiben sind.

### Beschreibung der Zeichnungen

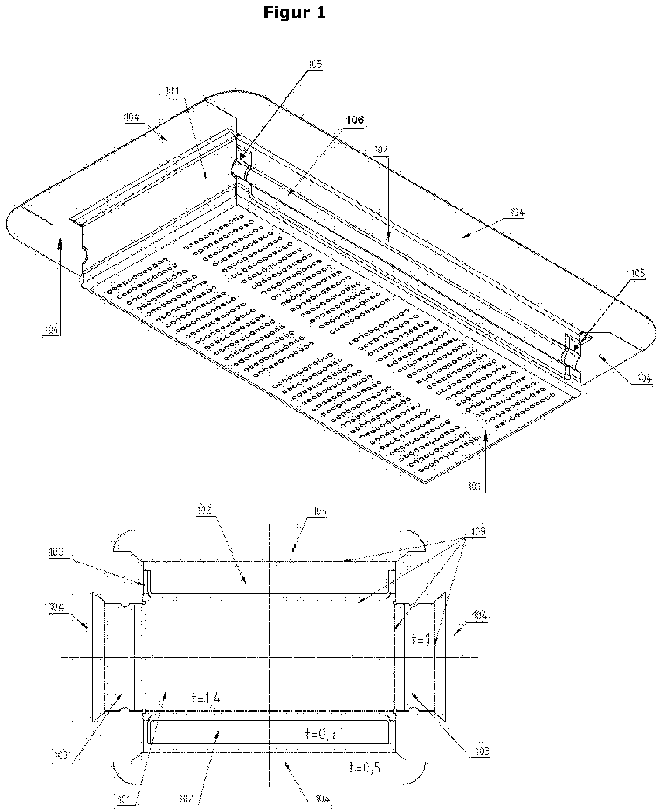

Figur 1 zeigt ein Bushing und eine Zeichnung des einstückigen Zuschnitts für dieses Bushing. Das Bushing weist eine Bodenplatte 101 auf, welche mit Auslaufdüsen versehen sind, die in der Zeichnung des Zuschnitts noch nicht angebracht sind. Die Seitenwände 102 weisen in der endgültigen Form des Bushings eine Versteifungssicke 106 auf, wobei die Seitenwand 102 einen verdickten Teil 105 aufweist, welcher zur besseren Verschweißung mit den rechteckigen Stirnwänden 103 die gleiche Dicke besitzt. An den Seitenwänden 102 und Stirnwänden 103 sind Flansche 104 angeordnet. Die Zeichnung des einstückigen Zuschnitts zeigt außerdem die Biegelinien 109. Stromzuführungen, Halte- oder Verstärkungsteile, welche separat angeschweißt werden müssen, sind in Figur 1 nicht gezeigt.

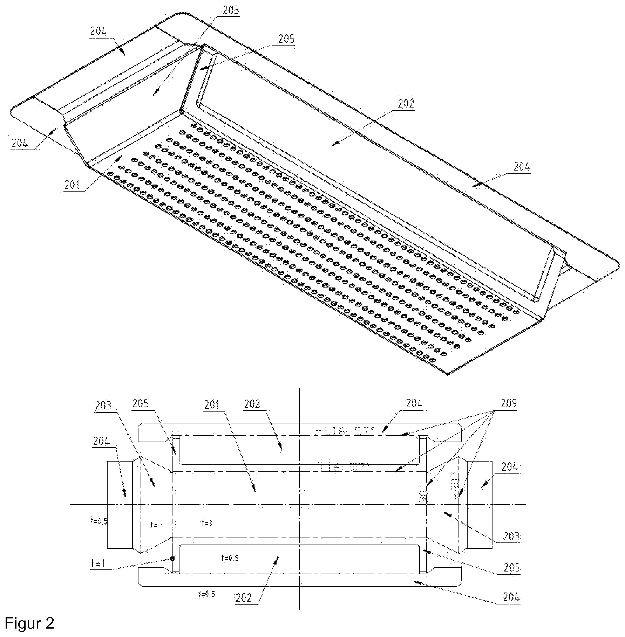

Figur 2 zeigt ein weiteres Bushing und eine Zeichnung dessen einstückigen Zuschnitts. Das Bushing weist eine Bodenplatte 201 auf, welche mit Auslaufdüsen versehen sind, die in der Zeichnung des Zuschnitts noch nicht angebracht sind. Die Stirnwände 203 weisen eine Trapezform auf. Seitenwände 202 sind mit einem verdickten Teil der Seitenwand 205 versehen, welche umlaufend ausgeführt ist und so die Kante, an welcher der Wechsel der Dicke stattfindet, in die Fläche der Seitenwände 202 verlegt. Der verdickte Teil der Seitenwand 205 weist die gleiche Dicke wie die trapezförmige Stirnwand 203 auf. An den Seitenwänden 202 und Stirnwänden 203 sind Flansche 204 angeordnet.

Figur 3a zeigt ein weiteres Bushing und eine Zeichnung dessen einstückigen Zuschnitts in 3b. Das Bushing weist eine Bodenplatte 301 auf. Auslaufdüsen sind in Figur 3a - 3d nicht angebracht. Die Stirnwände 303 und die Seitenwände 302 sind rechteckig, allerdings von unterschiedlicher Größe. An den Stirnwänden 303 und den Seitenwänden 302 sind Flansche 304 angebracht. Die Stirnwände 303 und die Seitenwände 302 sind über Eckteile 307 miteinander verbunden, die durch zwei Biegelinien 309 in zwei dreieckförmige Felder unterteilt sind. Alternative Ausführungsformen des Eckteils werden in den Figuren 3c und 3d gezeigt.

In Figur 3c weisen die beiden dreieckförmigen Eckteile 310 und 311, welche das Eckteil 307 bilden, keine rechten Winkel auf und sind als unregelmäßige Dreiecke ausgebildet. Im Gegensatz zu Fig. 3b ist der Winkel zwischen den Seitenwänden 302 und Stirnwänden 303 begrenzenden Biegelinien der Eckteile 307 kleiner als 90 Grad, so daß beim Biegen der Bushings die Seitenwände 302 und Stirnwände 303 mit der Bodenplatte 301 einen stumpfen Winkel bilden.

In Figur 3d ist die Stirnwand 303 mit einem Eckteil 307 versehen, welches lediglich aus einem dreieckförmigen Feld 310 besteht. Das Eckteil 307 ist mit der Seitenwand 302 nicht verbunden, so daß sich das Eckteil 307 nach dem Biegen im Inneren des Bushings befindet. Auf diese Weise wird beim anschließenden Schweißen die Schweißnaht auf die Innenseite der Seitenwand 302 verlegt und befindet sich nicht in der Ecke.

### Bezugszeichenliste

- 101 -: Bodenplatte
- 102 -: Seitenwand
- 103 -: Stirnwand
- 104 -: Flansch
- 105 -: verdickter Teil der Seitenwand
- 106 -: Versteifungssicke
- 109 -: Biegelinie

- 201 -: Bodenplatte
- 202 -: Seitenwand
- 203 -: Stirnwand
- 204 -: Flansch
- 205 -: verdickter Teil der Seitenwand
- 209 -: Biegelinie

- 301 -: Bodenplatte
- 302 -: Seitenwand
- 303 -: Stirnwand
- 304 -: Flansch
- 307 -: Eckteil
- 309 -: Biegelinie
- 310 -: Dreieckförmiges Feld
- 311 -: Dreieckförmiges Feld

## Patentansprüche

1. Aus einem einstückigen Zuschnitt faltbaren Flachmaterials aus Edelmetall gefaltetes Bushing zur Herstellung von Fasern aus geschmolzenem Mineralmaterial mit einer Bodenplatte (101, 201, 301) und hieran einstückig angelenkten und nach oben stehenden Seiten- (102, 202, 302) und Stirnwänden (103, 203, 303), an die jeweils Flansche (104, 204, 304) einstückig angelenkt sind, wobei eine Seitenwand (102, 202, 302) mit je einer Stirnwand (303) über ein Eckteil (307) miteinander verbunden sind und der einstückige Zuschnitt der Abwicklung des Bushings entspricht und Flächen für die Bodenplatte (101, 201, 301) und für die Eckteile (307), Seiten- (102, 202, 302) und Stirnwände (103, 203, 303) sowie Flansche (104, 204, 304) aufweist.

2. Bushing nach Anspruch 1, wobei der einstückige Zuschnitt faltbaren Flachmaterials aus Edelmetall in unterschiedlichen Bereichen unterschiedliche Dicken aufweist.

3. Bushing nach einem oder mehreren der Ansprüche 1 bis 2, wobei die Seitenwände (102, 202, 302), Stirnwände (103, 203, 303), Bodenplatte (101, 201, 301) oder mehrere davon Sicken (106) aufweisen.

4. Bushing nach einem oder mehreren der Ansprüche 1 bis 2, wobei zwischen den Seitenwänden (102, 202, 302) und den Flanschen (104, 204, 304) Deckplatten angeordnet sind, welche mit den Flanschen (104, 204, 304) und den Seitenwänden (102, 202, 302) einstückig angelenkt sind.

5. Bushing nach einem oder mehreren der Ansprüche 1 bis 4, wobei das Edelmetall ausgewählt ist aus der Gruppe bestehend aus PtAu5, Ptlr1, PtRh5, PtRh10, PtRh20, Ptlr3, Ptlr5, reinem Platin und deren Kombinationen.

6. Bushing nach einem oder mehreren der Ansprüche 1 bis 4, wobei das Edelmetall ein oxiddispersionverstärktes (WS) Edelmetall ist.

7. Bushing nach einem oder mehreren der Ansprüche 1 bis 4, wobei das Edelmetall ein mit einem oder mehreren Oxiden, insbesondere Yttriumoxid und/oder Zircondioxid, oxiddispersionverstärktes (ODS) Edelmetall ist.

8. Verfahren zur Herstellung des Bushings gemäß Anspruch 1 zur Herstellung von Fasern aus geschmolzenem Mineralmaterial mit den Schritten
- Erstellen einer Abwicklung des herzustellenden Bushings;
- Herstellung eines einstückigen Zuschnitts aus faltbarem Flachmaterials aus Edelmetall, welches der Abwicklung des Bushings entspricht;
- Gegebenenfalls Abtragen von Material des einstückigen Zuschnitts, um Bereiche unterschiedlicher Dicken zu erzeugen;
- Gegebenenfalls Anbringen von Sicken;
- Falten des einstückigen Zuschnitts.

9. Verfahren nach Anspruch 8, wobei die Herstellung des einstückigen Zuschnitts und/oder das Abtragen von Material durch Fräsen, Wasserstrahlschneiden, Laserschneiden, Stanzen, Schneiden, Sägen, Hobeln, Schleifen oder deren Kombinationen erfolgt.

10. Verfahren nach einem oder mehreren der Ansprüche 8 bis 9, wobei in einem weiteren Verfahrensschritt zusätzliche Elemente an dem Bushing angebracht werden, insbesondere Stromzuführungen und/oder Stütz- bzw. Verstärkungsteile.

11. Einstückiger Zuschnitt aus faltbarem Flachmaterial aus Edelmetall, welcher der Abwicklung eines Bushings gemäß Anspruch 1 entspricht und zur Herstellung eines Bushings geeignet ist, welches Flächen für eine Bodenplatte (101, 201, 301), und hieran einstückig angelenkt Seiten- (102, 202, 302) und Stirnwände (103, 203, 303), sowie daran jeweils einstückig angelenkte Flansche (104, 204, 304), und ferner Flächen für Eckteile (307) aufweist.

## Claims

1. Bushing folded from an integral cutting of foldable flat material made of noble metal for manufacturing fibres made of molten mineral material having a ground plate (101, 201, 301) with integrally hinged side walls (102, 202, 302) and integrally hinged front walls (103, 203, 303), said walls protruding upwards, wherein flanges (104, 204, 304) are respectively and integrally hinged with said walls, wherein a side wall (102, 202, 302) is respectively joined with one front wall (303) via a corner part (307), and wherein the integral cutting corresponds to the winding off of the bushing and has faces for the ground plate (101, 201, 301) and for the corner parts (307), the side walls (102, 202, 302) and the front walls (103, 203, 303) as well as for the flanges (104, 204, 304).

2. Bushing according to claim 1, wherein the integral cutting of foldable flat material made of noble metal has different thicknesses in different regions.

3. Bushing according to one or more of claims 1 to 2, wherein the sidewalls (102, 202, 302), the front walls (103, 203, 303), the ground plate (101, 201, 301) or several thereof have corrugations (106).

4. Bushing according to one or more of claims 1 to 2, wherein cover plates are arranged between the sidewalls (102, 202, 302) and the flanges (104, 204, 304), wherein said cover plates are integrally hinged with the flanges (104, 204, 304) and the sidewalls (102, 202, 302).

5. Bushing according to one or more of claims 1 to 4, wherein the noble metal is selected from the group consisting of PtAu5, Ptlr1, PtRh5, PtRh10, PtRh20, Ptlr3, Ptlr5, pure platinum and their combinations.

6. Bushing according to one or more of claims 1 to 4, wherein the noble metal is an oxide dispersion strengthened (ODS) noble metal.

7. Bushing according to one or more of claims 1 to 4, wherein the noble metal is a noble metal which is oxide dispersion strengthened (ODS) with one or more oxides, especially yttrium oxide and/or zirconium oxide.

8. Method for manufacturing the bushing according to claim 1 for manufacturing fibres made of molten mineral material with the steps
- preparing a winding off of the to-be-manufactured bushing;
- manufacturing an integral cutting of foldable flat material made of noble metal which corresponds to the winding off of the bushing;
- optionally removing material of the integral cutting to generate regions of different thicknesses;
- optionally attaching corrugations;
- folding of the integral cutting.

9. Method according to claim 8, wherein the manufacturing of the integral cutting and/or the removal of material is made by milling, waterjet cutting, laser cutting, punching, cutting, sawing, planing, grinding or combinations thereof.

10. Method according to one or more of claims 8 to 9, wherein additional elements are attached to the bushing in a further method step, especially power supplies and/or supporting or strengthening parts, respectively.

11. Integral cutting of foldable flat material made of noble metal which corresponds to the winding off of a bushing according to claim 1 and is suitable for manufacturing a bushing which has faces for a ground plate (101, 201, 301) and for side walls (102, 202, 302) and front walls (103, 203, 303), said walls being integrally hinged with said ground plate, as well as for flanges (104, 204, 304) respectively and integrally hinged with said walls and further faces for corner parts (307).

## Revendications

1. Ensemble filière plié à partir d'un flan d'une seule pièce de matériau plat pliable en métal noble pour la production de fibres à partir de matières minérales en fusion avec une plaque de fond (101, 201, 301) et des parois latérales (102, 202, 302) articulées d'une seule pièce à celle-ci et dressées vers le haut et des parois frontales (103, 203, 303), auxquelles des ailes (104, 204, 304) sont respectivement articulées d'une seule pièce, dans lequel une paroi latérale (102, 202, 302) et une paroi frontale (303) sont chacune reliées l'une à l'autre par une pièce d'angle (307) et le flan d'une seule pièce correspond à la développante de l'ensemble filière et présente des surfaces pour la plaque de fond (101, 201, 301) et pour les pièces d'angle (307), les parois latérales (102, 202, 302) et les parois frontales (103, 203 303) ainsi que les ailes (104, 204, 304).

2. Ensemble filière selon la revendication 1, dans lequel le flan d'une seule pièce de matériau plat pliable en métal noble présente des épaisseurs différentes dans des régions différentes.

3. Ensemble filière selon une ou plusieurs des revendications 1 à 2, dans lequel les parois latérales (102, 202, 302), les parois frontales (103, 203, 303), la plaque de fond (101, 201, 301) ou plusieurs de celles-ci présentent des moulures (106).

4. Ensemble filière selon une ou plusieurs des revendications 1 à 2, dans lequel des plaques de couverture sont disposées entre les parois latérales (102, 202, 302) et les ailes (104, 204, 304), et sont articulées d'une seule pièce aux ailes (104, 204, 304) et aux parois latérales (102, 202, 302).

5. Ensemble filière selon une ou plusieurs des revendications 1 à 4, dans lequel le métal noble est sélectionné dans le groupe composé de PtAu5, PtIr1, PtRh5, PtRh10, PtRh20, PtIr3, PtIr5, platine pur et leurs combinaisons.

6. Ensemble filière selon une ou plusieurs des revendications 1 à 4, dans lequel le métal noble est un métal noble renforcé par dispersion d'oxydes (WS).

7. Ensemble filière selon une ou plusieurs des revendications 1 à 4, dans lequel le métal noble est un métal noble renforcé par dispersion d'un ou de plusieurs oxyde(s) (ODS), en particulier d'oxyde d'yttrium et/ou de dioxyde de zirconium.

8. Procédé de fabrication de l'ensemble filière selon la revendication 1 pour la production de fibres à partir de matières minérales en fusion, comprenant les étapes suivantes:
- préparer la développante de l'ensemble filière à fabriquer;
- fabriquer un flan d'une seule pièce en matériau plat pliable en métal noble, qui correspond à la développante de l'ensemble filière;
- éventuellement enlever de la matière du flan d'une seule pièce, afin de produire des régions d'épaisseurs différentes;
- éventuellement créer des moulures;
- plier le flan d'une seule pièce.

9. Procédé selon la revendication 8, dans lequel la fabrication du flan d'une seule pièce et/ou l'enlèvement de matière est effectué par fraisage, découpage au jet d'eau, découpage au laser, estampage, coupe, sciage, rabotage, meulage ou leurs combinaisons.

10. Procédé selon une ou plusieurs des revendications 8 ou 9, dans lequel des éléments supplémentaires sont ajoutés à l'ensemble filière dans une autre étape de procédé, en particulier des arrivées de courant et/ou des pièces de soutien et/ou de renforcement.

11. Flan d'une seule pièce en matériau plat pliable en métal noble, qui correspond à la développante d'un ensemble filière selon la revendication 1 et qui convient pour la fabrication d'un ensemble filière, qui présente des surfaces pour une plaque de fond (101, 201, 301), et des parois latérales (102, 202, 302) articulées d'une seule pièce à celle-ci et des parois frontales (103, 203, 303), ainsi que des ailes (104, 204, 304) respectivement articulées d'une seule pièce à celles-ci et en outre des surfaces pour des pièces d'angle (307).
